# EUROPEAN PATENT SPECIFICATION

(11) **EP 1 025 703 B1**
(45) Date of publication and mention of the grant of the patent: **09.04.2003**
(21) Application number: 98936540.8
(22) Date of filing: 29.07.1998
(51) Int. Cl.: H04N 7/24, H04N 7/088, H04N 7/52

(54) **A METHOD AND APPARATUS FOR SWITCHING BETWEEN DIGITAL SUBTITLE BITSTREAMS**
VERFAHREN UND VORRICHTUNG ZUM UMSCHALTEN ZWISCHEN DIGITALEN UNTERTITELBITSTRÖMEN
PROCEDE ET APPAREIL DE COMMUTATION ENTRE DES TRAINS BINAIRES NUMERIQUES DE SOUS-TITRES

(30) Priority: 06.08.1997 GB 9716545
(43) Date of publication of application: 09.08.2000
(73) Proprietor: Tandberg Television ASA, 1326 Lysaker (NO)
(72) Inventor: DALLARD, Nigel, Stephen, Eastleigh, Hampshire SO50 4NW (GB)
(74) Representative: Molyneaux, Martyn William
(86) International application number: GB9802273
(87) International publication number: WO99008448

(56) References cited:
- EP-A- 0 692 911
- EP-A- 0 734 180
- EP-A- 0 751 680
- EP-A- 0 755 157
- EP-A- 0 782 332
- WO-A-96/19077
- US-A- 5 477 263
- WEISS S M: "SWITCHING FACILITIES IN MPEG-2: NECESSARY BUT NOT SUFFICIENT" SMPTE JOURNAL, vol. 104, no. 12, 1 December 1995, pages 788-802, XP000543847
- BUNGUM O W: "TRANSMULTIPLEXING, TRANSCONTROL AND TRANSSCRAMBLING OF MPEG-2/DVB SIGNAL" INTERNATIONAL BROADCASTING CONVENTION, 12 September 1996, pages 288-293, XP002040478

## Description

The present invention relates generally to digital video broadcasting (DVB) and more specifically to a method and apparatus for switching between digital bit-streams.

EP-A-0782332 discloses an MPEG video decoder and MPEG audio decoder for decoding MPEG video data and MPEG audio data separated by a de-multiplexer. A digital interface sends and receives MPEG video data, MPEG audio data and supplementary data between the de-multiplexer and external devices. The digital interface detects a flag indicating a discontinuity in a program from an input signal, and a microcomputer performs controls so as to initialise buffer memories. When the microcomputer detects data indicating a recording start and recording end position in playback data sent by the de-multiplexer, this is notified to the digital interface which generates a discontinuity flag identifying a program change in a header of an asynchronous packet into which video data from the de-multiplexer is input.

In a digital broadcast system there are times when it becomes necessary to splice television programs together in the compressed domain. This might occur, for example, when broadcasts are switched from national broadcasts to regional broadcasts to accommodate regional variations in programme scheduling or advertisements, as well as when originating programmes from video servers.

For the purposes of this document, splicing is defined as the switching from a first bit-stream to a second bit-stream. In the digital video broadcasting domain, splicing requires that the second bit-stream is modified so that, to a receiver, the streams appear identical. This is achieved by, amongst other things changing the appropriate packet identifiers in the second bit-stream to match those in the first bit-stream.

When splicing is necessary it is important to ensure that the individual elementary streams (video, audio, subtitles, etc.) are 'legal' and do not cause any problems for the decoder.

A subtitles elementary stream consists of a multiplex of several individual subtitle streams (to accommodate multiple languages, for example), together with a common set of ancillary data, such as logos or graphics.

In the temporal domain, a stream consists of a hierarchical structure. At the highest level is the 'epoch', indicating the start of a period, which typically lasts for the full length of a television programme. Inside each epoch there are a number of 'displays' which are actual displayed subtitle frames. The data forming each display is carried in 'segments'.

The first part of a subtitle definition is known as a Page Composition Segment (PCS). This is used in defining which and how many areas of the display are to be used for displaying subtitles. There are other components of a subtitle definition and these are described in more detail in European Standards ETS-300743.

The PCS contains a flag known as 'Page State' which is used to indicate to the subtitle decoder the required configuration of memory and resources that are needed to correctly display a given set of subtitles. The 'Page State' flag can take various values including 'Mode Change' and 'Acquisition Point'.

At the start of every programme the 'Page State' flag is transmitted with a value of 'Mode Change'. This causes the receiver to reset the subtitle decoder, clear all the associated memory and reconfigure the subtitle decoder for the subtitle stream that will follow according to the configuration data following the 'Page State' flag.

The 'Mode Change' is transmitted infrequently since, due to the requirement that the decoder discards its existing configuration of subtitle & resources upon reception of this flag, some disturbances to the display of subtitles may occur. It will typically be transmitted at the start of each programme although it may also be desirable to send additional 'Mode Changes' at intermediate times.

If a viewer changes channel, say half way through a programme, then the subtitle decoder will already have missed and therefore will not receive the 'Mode Change'. To ensure that the decoder is correctly configured, however, throughout every programme the 'Page State' flag with a value of 'Acquisition Point' is transmitted every few seconds followed by a repetition of the configuration data sent at the start of the programme.

If a 'Mode Change' has been received, the 'Acquisition Points' are ignored until either a new 'Mode Change' is received or the user changes channel. The channel change has the effect of resetting the subtitle decoder. Once the reset has occurred the subtitle decoder will take the information following the 'Acquisition Point' and use this to configure the subtitle decoder memory.

When switching between two independent MPEG streams it is important for the change-over to appear transparent to the viewer. If there are subtitles being transmitted on both streams then it is also important that the change-over happens cleanly and that no corruption of subtitles occurs.

When one MPEG stream is spliced into another the splice appears transparent to the receiver, i.e. all the stream and packet IDs remain identical. The problem that occurs, however, is that if the subtitles in the first stream require a different configuration to those in the second after the splice has taken place, then the receiver will not recognise that a change of streams has taken place - the reason being that the receiver would have already received a 'Mode Change' before the splice, but after the splice it would only receive 'Acquisition Points', until the start of the following programme, hence these would be ignored.

This problem could lead to a subtitle decoder not being correctly configured after a splice of two subtitle streams has occurred.

According to a first aspect of this invention there is provided a method of switching from transmitting a first digital subtitle stream to transmitting a second digital subtitle stream, both said streams including configuration flags some of which contain a mode change value which will cause a reconfiguration of a subtitle decoder located in a receiver, the method comprising the steps of:
providing a control signal to switch from the first stream to the second stream;
identifying a configuration flag in the second stream after the switch has occurred; and
checking whether the identified flag contains the said mode change value and, if not, changing the identified flag to contain the said value so as to cause reconfiguration of said subtitle decoder.

According to a second aspect of the present invention there is provided apparatus for switching from transmitting a first digital subtitle stream to transmitting a second digital subtitle stream, both said streams including configuration flags some of which contain a mode change value which will cause a reconfiguration of a subtitle decoder located in a receiver, the apparatus comprising:
a switch (35) activated by a control signal (13), for switching from the first stream to the second stream;
an analyser (31) for identifying configuration flags in the second stream and arranged to check whether the identified flag contains the said mode change value; and
a modifier for changing the value of the identified flag to contain the said mode change value if the flag does not already contain the said mode change value so as to thereby cause reconfiguration of said subtitle decoder.

The invention will now be described by reference to the accompanying drawings, in which:
Figure 1 is a block diagram showing an overview of the present invention;
Figure 2 is a diagram showing the splicing of two subtitle streams; and
Figure 3 is a detailed diagram showing one embodiment of the present invention.

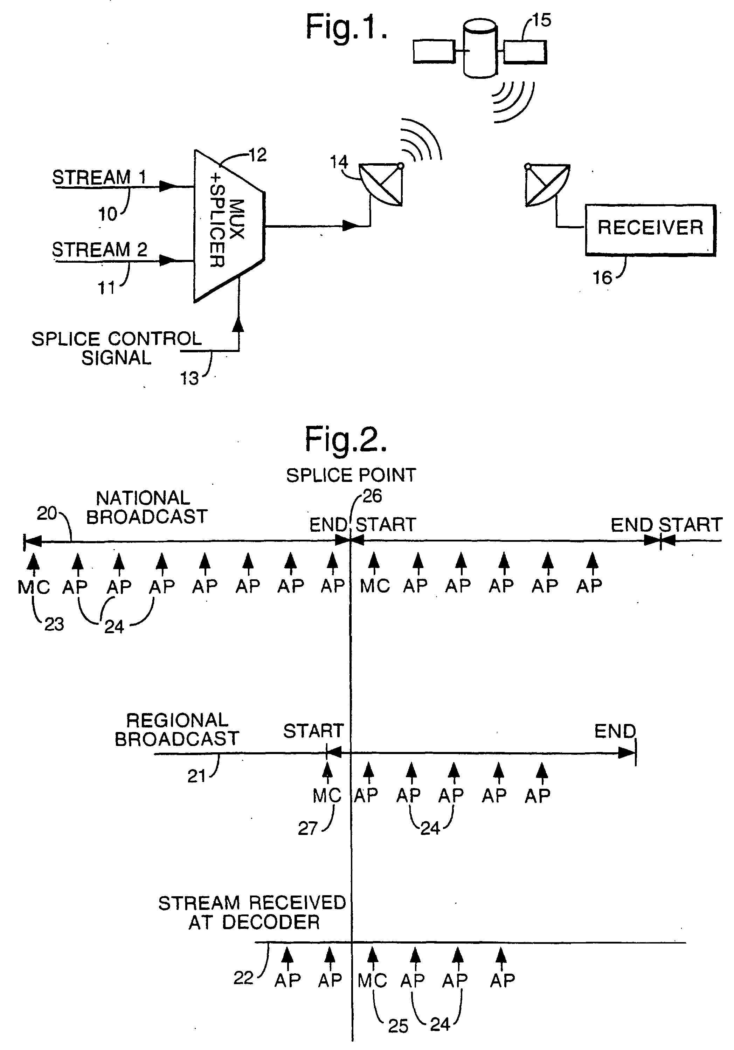

Referring to Figure 1, two input streams 10 and 11 are shown as inputs to a multiplexer 12. The input streams can represent any individual sort of bit-stream, although for the purposes of this example they are representative of a national broadcast and a local broadcast. A National stream 10 represents an MPEG stream for a national broadcast. A Regional stream 11 represents a broadcast for a regional programme. Under normal operation, national stream 10 would be transmitted through multiplexer 12 to a satellite up-link 14, via satellite 15 and down to one of many receivers 16. Alternative transmission means could also be employed in place of the satellite link, such as a terrestrial or cable link.

When a switch-over is required from a national broadcast to a regional broadcast this can be initiated by way of a splice control signal 13. This causes a splice to occur and for regional stream 11 to be transmitted to the receivers instead of national stream 10. The splice occurs in such a way that, to the receiver nothing has changed - i.e. all the stream IDs are changed to be identical to that of the first stream.

Figure 2 is a diagram showing in more detail the composition of each of the input streams. National stream 20 represents a national transmission which is to be spliced with regional stream 21. Received stream 22 represents the stream which is received at a receiver.

At the start of each programme in stream 20, the 'Page State' flag is sent with a value 'Mode Change' 23. When received at the receiver this will cause the subtitle decoder to reset and to reconfigure itself according to the information contained in the bit-stream after the 'Page State' flag. The 'Mode Change' is typically sent infrequently i.e. only at the start of each programme.

Every few seconds, however, the 'Page State' flag is sent with the value of 'Acquisition Point' 24. This is normally ignored by the decoder if the decoder has already received a 'Mode Change'. However, if a user changes to a channel, say half way through a programme the decoder will not receive the 'Mode Change' as this will already have been missed (since it is generally sent only at the start of each programme). In this situation, after a channel change, the decoder will pick-up the 'Acquisition Point' which is followed by the same information regarding the memory configuration as follows the 'Mode Change'. This allows the decoder to reconfigure itself for the correct memory configuration.

When the national broadcast is required to change to the regional broadcast the splice control signal 13 will be sent to the multiplexer indicating that a splice is to take place imminently.

A splice can take place at any time, but it is most convenient if it occurs at the end of the current subtitle segment. The point of the splice is indicated at splice point 26. The regional broadcast 21 is then 'spliced in' through the multiplexer. This will ensure that, to the receiver, the data stream appears identical to that before the splice.

Looking now at regional broadcast stream 21, the splice point 26 is shown. It cannot be guaranteed that 'Mode Change' associated with the start of regional program will appear immediately after the splice due to timing considerations. As shown in Figure 2, the 'Mode Change' 27 actually occurs before the splice has taken place.

To ensure that the splice is effected cleanly the following important step needs to take place. As soon as the splice has taken place the multiplexer must change the first 'Page State' flag to 'Mode Change'. If the first 'Page State' flag is 'Mode Change' then obviously this does not need to be changed. However, if the first 'Page State' flag after the splice is 'Acquisition Point' then this has to be changed to 'Mode Change' to force the receiver to reconfigure itself.

Turning to stream 22, the actual stream as received at the receiver is shown. Due to the timing of the splice it can be seen that the 'Mode Change' for the new stream was missed, as the splice took place after the 'Mode Change' in the regional stream 21. However, this does not cause a problem for the receiver as the present invention changes the first 'Page State' flag that occurs after the splice to a have a value of 'Mode Change'. This ensures that the receiver is correctly configured to receive the current subtitle stream.

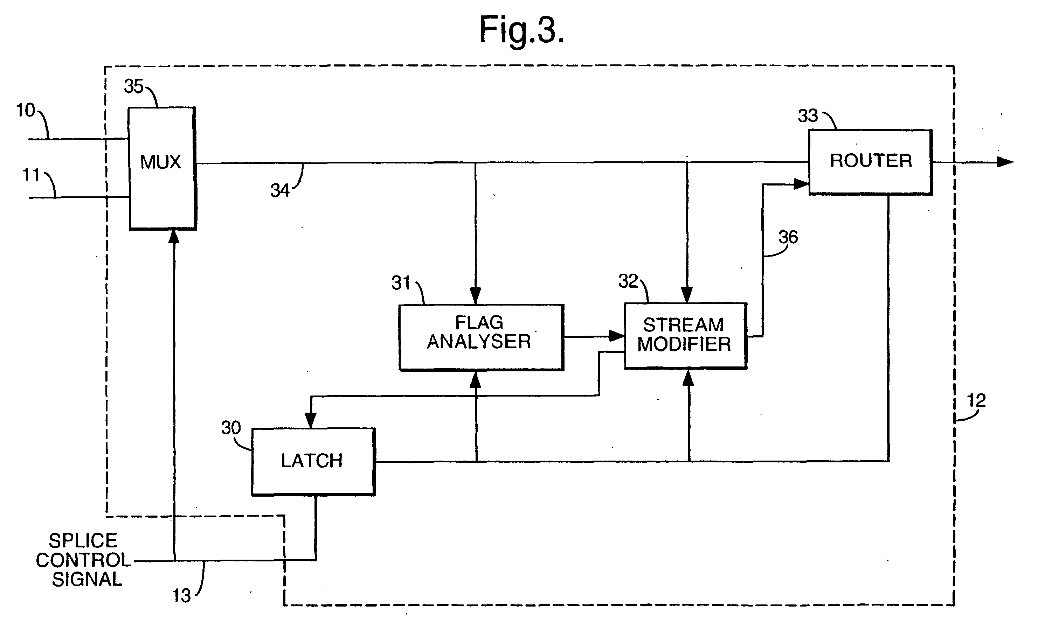

Figure 3 shows in more detail one embodiment of the multiplexer and splicer 12 When a splice is signalled to take place, splice control signal 13 causes a latch 30 to control a flag analyser 31, a bit-stream modifier 32 and a router 33. The splice control signal 13 also controls the multiplexer 35 which changes the output stream 34 to the desired input stream.

Once activated, the flag analyser 31 analyses the bit-stream 34 looking for 'Page State' flags. When it finds one it signals this to stream modifier 32 which checks to see whether the flag needs modifying to 'Mode Change' and if so then carries out the modification. The modified bit-stream 36 is fed to a router 33 which causes the modified bit-stream to be output to the up-link 14.

After the splice has occurred the latch relinquishes control of the flag analyser 31 and stream modifier 32 and the stream 34 flows through router 33 to up-link 14.

In this particular example the modification of the 'Page State' flag has to occur for the first 'Page State' flag in each of the individual subtitle streams inside the subtitle bit-stream - for example, in a multi-language subtitle stream there is a separate subtitle stream for each of the different languages.

## Claims

1. A method of switching from transmitting a first digital subtitle stream (20) to transmitting a second digital subtitle stream (21), both said streams including configuration flags (23, 24) some of which contain a mode change value (23) which will cause a reconfiguration of a subtitle decoder located in a receiver (16), the method comprising the steps of:
providing a control signal (13) to switch (26) from the first stream to the second stream;
identifying a configuration flag (24) in the second stream (21) after the switch has occurred; and
checking whether the identified flag (24) contains the said mode change value (23) and, if not, changing the identified flag to contain the said value (25) so as to cause reconfiguration of said subtitle decoder.

2. The method of claim 1, in which the step of identifying a configuration flag in the second stream comprises identifying the first such flag after the switch has occurred.

3. The method of claim 1 or 2, wherein each stream consists of a digital video broadcast subtitle stream.

4. A method as claimed in any preceding claim, wherein said configuration flags include a page state flag transmitted with a mode change value (24), which said mode change value when received by the receiver subtitle decoder causes said decoder to reset and reconfigure itself according to information contained in the bit stream after the page state flag.

5. A method as claimed in claim 4, wherein said mode change value is transmitted infrequently and said page state flag is then transmitted with a more frequent acquisition flag value which does not cause said decoder to reconfigure if a mode change value has already been received, whereby when said control signal (13) is applied to switch from said first stream to said second stream, if the next identified page state flag has an acquisition flag value, then said next identified flag is changed to a mode change value.

6. Apparatus for switching from transmitting a first digital subtitle stream (20) to transmitting a second digital subtitle stream (21), both said streams including configuration flags (23, 24) some of which contain a mode change value (23) which will cause a reconfiguration of a subtitle decoder located in a receiver (16), the apparatus comprising:
a switch (35) activated by a control signal, for switching (26) from the first stream to the second stream;
an analyser (31) for identifying configuration flags in the second stream and arranged to check whether the identified flag (24) contains the said mode change value (23); and
a modifier (32) for changing the value of the identified flag to contain the said mode change value (23) if the flag does not already contain the said mode change value so as to thereby cause reconfiguration of said subtitle decoder.

7. The apparatus of claim 6, wherein the analyser is adapted to identify the first configuration flag in the second stream after the switch has occurred.

8. The apparatus of claim 6 or 7, wherein the streams each consist of a digital video broadcast subtitle stream.

9. An apparatus as claimed in any of claims 6 - 8 inclusive, wherein said configuration flags include a page state flag transmitted with a mode change value (24), which said mode change value when received by the receiver subtitle decoder causes said decoder to reset and reconfigure itself according to information contained in the bit stream after the page state flag.

10. An apparatus as claimed in claim 9, wherein said mode change value is transmitted infrequently and said page stage flag is then transmitted with a more frequent acquisition flag value which does not cause said decoder to reconfigure if a mode change value has already been received, whereby when said control signal (13) is applied to switch from said first stream to said second stream, if the next identified page state flag has an acquisition flag value, then said next identified flag is changed to a mode change value.

## Patentansprüche

1. Verfahren zum Umschalten von der Übertragung eines ersten digitalen Untertitelstroms (20) zur Übertragung eines zweiten digitalen Untertitelstroms (21), wobei beide Ströme Konfigurationskennzeichen (23, 24) aufweisen, von denen einige einen Modusänderungswert (23) aufweisen, der eine Rekonfiguration eines in einem Empfänger (16) angeordneten Untertiteldecodierers bewirkt, wobei das Verfahren die folgenden Schritte umfasst:
Vorsehen eines Steuersignals (13) zum Umschalten (26) von dem ersten Strom auf den zweiten Strom;
Identifizieren eines Konfigurationskennzeichens (24) in dem zweiten Strom (21) nach dem das Umschalten erfolgt ist; und
Überprüfen, ob das identifizierte Kennzeichen (24) den genannten Modusänderungswert (23) aufweist, und falls dies nicht der Fall ist, wird das identifizierte Kennzeichen derart geändert, dass es den genannten Wert (25) aufweist, so dass eine Rekonfiguration des Untertiteldecodierers bewirkt wird.

2. Verfahren nach Anspruch 1, wobei der Schritt des Identifizierens eines Konfigurationskennzeichens in dem zweiten Strom das Identifizieren des ersten derartigen Kennzeichens nach dem erfolgten Umschalten umfasst.

3. Verfahren nach Anspruch 1 oder 2, wobei jeder Strom einen digitalen Video-Broadcast-Untertitelstrom aufweist.

4. Verfahren nach einem der vorstehenden Ansprüche, wobei die genannten Konfigurationskennzeichen ein Seitenzustandskennzeichen aufweisen, das mit einem Modusänderungswert (24) übertragen wird, wobei der Modusänderungswert, wenn er von dem Empfänger-Untertiteldecodierer empfangen wird, eine Rücksetzung und Rekonfiguration des Decodierers gemäß den in dem Bitstrom nach dem Seitenzustandskennzeichen enthaltenen Informationen bewirkt.

5. Verfahren nach Anspruch 4, wobei der genannte Modusänderungswert vereinzelt übertragen wird, und wobei das Seitenzustandskennzeichen danach mit einem häufigeren Erfassungskennzeichenwert übertragen wird, der keine Rekonfiguration des Decodierers bewirkt, wenn ein Modusänderungswert bereits empfangen worden ist, wobei das nächste identifizierte Kennzeichen in einen Modusänderungswert geändert wird, wenn das genannte Steuersignal (13) für ein Umschalten von dem ersten Strom auf den zweiten Strom zugeführt wird, wenn das nächste identifizierte Seitenzustandskennzeichen einen Erfassungskennzeichenwert aufweist.

6. Vorrichtung zum Umschalten von der Übertragung eines ersten digitalen Untertitelstroms (20) zur Übertragung eines zweiten digitalen Untertitelstroms (21), wobei beide Ströme Konfigurationskennzeichen (23, 24) aufweisen, von denen einige einen Modusänderungswert (23) aufweisen, der eine Rekonfiguration eines in einem Empfänger (16) angeordneten Untertiteldecodierers bewirkt, wobei die Vorrichtung folgendes umfasst:
einen Schalter (35), der von einem Steuersignal aktiviert wird, um von dem ersten Strom auf den zweiten Strom umzuschalten (26);
einen Analysator (31) zum Identifizieren von Konfigurationskennzeichen in dem zweiten Strom, und wobei der Analysator so angeordnet ist, dass er überprüft, ob das identifizierte Kennzeichen (24) den genannten Modusänderungswert (23) aufweist; und
einen Modifikator (32) zum Ändern des Werts des identifizierten Kennzeichens, so dass dieses den genannten Modusänderungswert (23) aufweist, wenn das Kennzeichen den genannten Modusänderungswert noch nicht aufweist, so dass dadurch eine Rekonfiguration des genannten Untertiteldecodierers bewirkt wird.

7. Vorrichtung nach Anspruch 6, wobei der Analysator in der Lage ist, das erste Konfigurationskennzeichen in dem zweiten Strom nach dem erfolgten Umschalten zu identifizieren.

8. Vorrichtung nach Anspruch 6 oder 7, wobei die Ströme jeweils einen digitalen Video-Broadcast-Untertitelstrom aufweisen.

9. Vorrichtung nach einem der Ansprüche 6 bis 8, wobei die genannten Konfigurationskennzeichen ein Seitenzustandskennzeichen aufweisen, das mit einem Modusänderungswert (24) übertragen wird, wobei der Modusänderungswert, wenn er von dem Empfänger-Untertiteldecodierer empfangen wird, eine Rücksetzung und Rekonfiguration des Decodierers gemäß den in dem Bitstrom nach dem Seitenzustandskennzeichen enthaltenen Informationen bewirkt.

10. Vorrichtung nach Anspruch 9, wobei der genannte Modusänderungswert vereinzelt übertragen wird, und wobei das Seitenzustandskennzeichen danach mit einem häufigeren Erfassungskennzeichenwert übertragen wird, der keine Rekonfiguration des Decodierers bewirkt, wenn ein Modusänderungswert bereits empfangen worden ist, wobei das nächste identifizierte Kennzeichen in einen Modusänderungswert geändert wird, wenn das genannte Steuersignal (13) für ein Umschalten von dem ersten Strom auf den zweiten Strom zugeführt wird, wenn das nächste identifizierte Seitenzustandskennzeichen einen Erfassungskennzeichenwert aufweist.

## Revendications

1. Procédé de basculement entre la transmission d'un premier train numérique de sous-titre (20) et la transmission d'un deuxième train numérique de sous-titre (21), chacun desdits trains comprenant des balises de configuration (23, 24) dont certaines contiennent une valeur (23) de changement de mode qui entraîne une reconfiguration d'un décodeur de sous-titre situé dans un récepteur (16), le procédé comprenant les étapes consistant à:
délivrer un signal de commande (13) pour basculer (26) entre le premier train et le deuxième train;
identifier une balise de configuration (24) du deuxième train (21) après que le basculement a eu lieu; et
vérifier si la balise (24) identifiée contient ladite valeur (23) de changement de mode et, sinon, modifier la balise identifiée pour qu'elle contienne ladite valeur (25) de manière à amener la reconfiguration dudit décodeur de sous-titre.

2. Procédé selon la revendication 1, dans lequel l'étape d'identification d'une balise de configuration dans le deuxième train comprend l'identification de la première de ces balises après que le basculement a eu lieu.

3. Procédé selon la revendication 1 ou 2, dans lequel chaque train est constitué d'un train numérique de sous-titre de diffusion vidéo.

4. Procédé selon l'une quelconque des revendications précédentes, dans lequel lesdites balises de configuration comprennent une balise d'état de pagination émise avec une valeur (24) de modification de mode, laquelle valeur de changement de mode, lorsqu'elle est reçue par le décodeur de sous-titre du récepteur, amène ledit décodeur à se réinitialiser et à se reconfigurer en fonction des informations contenues dans le train de bits après la balise d'état de pagination.

5. Procédé selon la revendication 4, dans lequel ladite valeur de changement de mode est émise de façon non fréquente, ladite balise d'état de pagination étant alors émise à une valeur de balise d'acquisition plus fréquente qui n'amène pas ledit décodeur à se reconfigurer si une valeur de changement de mode a déjà été reçue, et lorsque ledit signal de commande (13) est appliqué pour basculer dudit premier train audit deuxième train, si la balise d'état de pagination identifiée ensuite présente une valeur de balise d'acquisition, ladite balise identifiée ensuite est transformée en une valeur de changement de mode.

6. Appareil pour basculer entre l'émission d'un premier train numérique de sous-titre (20) et l'émission d'un deuxième train numérique de sous-titre (21), chacun desdits trains comprenant des balises de configuration (23, 24) dont certaines contiennent une valeur (23) de changement de mode qui amène une reconfiguration d'un décodeur de sous-titre situé dans un récepteur (16), l'appareil comprenant:
un commutateur (35) activé par un signal de commande pour basculer (26) entre le premier train et le deuxième train;
un analyseur (31) pour identifier des balises de configuration dans le deuxième train et agencé pour vérifier si la balise (24) identifiée contient ladite valeur (23) de changement de mode; et
un modificateur (32) pour changer la valeur de la balise identifiée de telle sorte qu'elle contienne ladite valeur (23) de changement de mode si la balise ne contient pas déjà ladite valeur de changement de mode, pour ainsi amener la reconfiguration dudit décodeur de sous-titre.

7. Appareil selon la revendication 6, dans lequel l'analyseur est adapté pour identifier la première balise de configuration dans le deuxième train après que le basculement a eu lieu.

8. Appareil selon la revendication 6 ou 7, dans lequel les trains sont chacun constitués d'un train numérique de sous-titre de diffusion vidéo.

9. Appareil selon l'une quelconque des revendications 6 à 8 incluses, dans lequel lesdites balises de configuration comprennent une balise d'état de pagination émise avec une valeur (24) de changement de mode, ladite valeur de changement de mode, lorsqu'elle est reçue par le décodeur de sous-titre du récepteur, amenant ledit décodeur à se réinitialiser et à se reconfigurer en fonction des informations contenues dans le train de bits après la balise d'état de pagination.

10. Appareil selon la revendication 9, dans lequel ladite valeur de changement de mode est émise de façon non fréquente, ladite balise d'état de pagination étant ensuite émise avec une valeur plus fréquente de balise d'acquisition qui n'amène pas ledit décodeur à se reconfigurer si une valeur de changement de mode a déjà été reçue, et lorsque ledit signal de commande (13) est appliqué pour basculer entre ledit premier train et ledit deuxième train, si la balise d'état de pagination identifiée ensuite présente une valeur de balise d'acquisition, la balise identifiée ensuite est modifiée en une valeur de changement de mode.
